# EUROPEAN PATENT APPLICATION

(11) **EP 2 336 658 A1**
(43) Date of publication of application: **22.06.2011**
(21) Application number: 09814283.9
(22) Date of filing: 15.09.2009
(51) Int. Cl.: F24F 6/04

(54) **NATURAL EVAPORATION TYPE HUMIDIFIER**

(30) Priority: 18.09.2008 JP 2008239273
(71) Applicant: Mikuni Corporation, Tokyo 101-0021 (JP)
(72) Inventor: HAMADA, Kouta, Odawara-shi Kanagawa 250-0055 (JP)
(74) Representative: Schwabe - Sandmair - Marx
(86) International application number: PCT/JP2009/004604
(87) International publication number: WO 2010/032438

(57) **Abstract**

A natural evaporation type humidifier which, although small in size, has high humidifying performance. A sheet-like member (1) is provided with a water supply section (2) for supplying water to a humidifying section (3), and also with the humidifying section (3) for performing humidification by evaporating the water supplied from the water supply section (2). Because the water supply section (2) immersed in the water is folded up, that portion of the sheet-like member (1) which has a large area is compact in size, and this allows the portion to be immersed in water so as to function as the water supply section (2). That is, although compactly formed, that portion of the sheet-like member (1) which has the area which is relatively large can function as the water supply section (2), and as a result, the water supply section has high water supply performance. In contrast to the water supply section (2), the humidifying section (3) has an expanded shape, so that the humidifying section (3) has a sufficient area for evaporating the water. In addition, although compactly formed, the water supply section (2) can supply a sufficient amount of the water as described above. The structure enables the water supply section (2) to supply the water of an amount corresponding to the amount of evaporation of the water at the humidifying section (3) having the large area.

## Description

### BACKGROUND OF THE INVENTION

### 1. Field of the Invention:

The present invention relates to a natural evaporation type humidifier to humidify space therearound as naturally evaporating water absorbed by a sheet-like member having a capillary structure to absorb water with capillarity.

### 2. Description of the Related Art:

Traditionally, there has been known a natural evaporation type humidifier to humidify space therearound as urging evaporation of water to increase contact area of water with air by absorbing water with a sheet-like member having a wide surface area and a capillary structure to absorb water with capillarity.
Further, there has been proposed a portable humidifier as downsizing the natural evaporation type humidifier to be capable of being accommodated in a case having a liquid reservoir portion (for example, see Patent Document 1).

According to the portable natural evaporation type humidifier, when not being used or being carried, a sheet-like humidifying element having water absorbability is accommodated in a state of being folded. When being used, the humidifying element of which portions are connected respectively to an opened section and another section of a case is to be in an expanded state from the folded state as a result of opening the case. Accordingly, water absorbed from the water reservoir in the case is evaporated through the expanded humidifying element.

With such a portable natural evaporation type humidifier, it is possible to humidify space around a user at somewhere including one' s home, for example. Accordingly, drying of the skin and throat can be prevented by humidifying even when ambient air dries as a result of heating or cooling. In particular, even in a difficult situation to set a usual humidifier or to change setting of a placed humidifier on one's own at office or somewhere else, it is possible to increase humidity of space around a user by utilizing the portable natural evaporation type humidifier.

Patent document 1: Japanese Patent Laid-open 2005-321184

### SUMMARY OF THE INVENTION

### Problems to be Solved by the Invention

When continuously using a humidifier of one' s own without electric power at a predetermined position such as on a desk at office, downsizing is required for restriction of placing location regardless of necessarily being carried.
For being portable, further downsizing is required. Here, there may be a fear that humidifying is not sufficiently performed as a result of downsizing.

For example, the natural evaporation type humidifier of Patent document 1 is configured that humidifying element for evaporating water is immersed in water at relatively large area thereof so as to ensure the water absorbing amount. Here, when a wall surrounding the water reservoir of the case is heightened to prevent water spilling when using as the case opened while immersing a section of the humidifying element having relatively large area in water of the water reservoir, the case having the water reservoir to accommodate the humidifying element becomes large to worsen portability.

In order to enhance humidifying performance, it is required to ensure sufficient water-supply performance to a section of the humidifying element which is not immersed in water by immersing a section of the humidifying element having relatively large area. In addition, it is required to ensure sufficient evaporation performance by enlarging area of a section to evaporate water. Accordingly, there may be a fear that portability is diminished, that is, that downsizing is difficult. Then, there may be a fear to be forced to choose between precedence of portability (i.e., downsizing) and precedence of humidifying performance. Even if it is not as being carried, sufficient water-supply performance and evaporation performance are required as described above in order to obtain sufficient humidifying performance. When the area of the immersed section in water and the area of the evaporating section of the sheet-like member are enlarged, it becomes difficult to achieve downsizing. Thus, when large area on a desk is to be occupied, it becomes difficult to personally use the humidifier.

Further, when being used on a desk or at one' s surroundings, spilling of water causes a problem. Accordingly, it is required to make consideration such as heightening the wall surrounding the water reservoir as described above. Further, as a result of arrangement of the sheet-like member protruding upward from the water reservoir, the possibility of water-spilling occurrence due to toppling cannot be simply denied. Accordingly, the placing location is to be restricted.

Further, since the humidifying element essentially gets dirty with relatively long-term usage, it is required to be cleaned. Here, the humidifying element is connected to the case so as to be folded and expanded in association with opening and closing of the case as described above. Therefore, even though the humidifying element is connected to the case in a detachably attachable manner, there has been a problem of demanding cleaning caused by requirement of complicated operation of detaching and attaching of the humidifying element from and to the case.

To address the above issues, the present invention provides a natural evaporation type humidifier capable of having sufficient humidifying performance for private use even being small in size.

### Means to Solve the Problems

To address the above issues, according to claim 1, in a natural evaporation type humidifier to humidify space therearound utilizing a sheet-like member with a capillary structure capable of absorbing water with capillarity by absorbing water to the sheet-like member above a water surface and naturally evaporating water from the sheet-like member as immersing a part of the sheet-like member in reserved water; a section of one end side of the sheet-like member is to be a water-supply section to supply water to a section of the sheet-like member above the section of the one end side by being folded along plural folding lines and being immersed in the reserved water; the section above the section of the one end side is to be a humidifying section to naturally evaporate water absorbed with capillarity; and a folding portion being moderately folded along a curved folding line which is continued from a folding line of the water-supply section is arranged at the humidifying section of the sheet-like member to be in an expanded state while the section of the one end side is supported.

According to the invention of claim 1, the sheet-like member includes the water-supply section to supply water to the humidifying section and the humidifying section to perform humidifying as evaporating water which is supplied from the water-supply section. Here, since the water-supply section to be immersed in water is in a folded state, a large-area section of the sheet-like member can be the water-supply section as being compactly immersed in water. That is, even being compactly shaped, the part of the sheet-like member having relatively large area can be operated as the water-supply section. Accordingly, it is possible to provide high water-supply performance to the water-supply section.

Further, since the humidifying section is shaped to be expanded against the water-supply section, the area of the humidifying section to evaporate water can be sufficiently ensured. Further, since a sufficient water-supply amount can be ensured even with the compactly-formed water-supply section as described above, water can be supplied by the amount corresponding to the water evaporation amount at the humidifying section having large area. Accordingly, even being compactly shaped, sufficient humidifying performance can be obtained for private use. Further, since the evaporation type humidifier can be downsized, placing area can be lessened to increase possible placing locations. Therefore, it is possible to reduce a fear of being bothered for locating a place.

Further, as being compactly shaped as a whole, it can be easily carried. For example, it is easily possible to change the placing location within a building. When being in a non-used state, that is, in an unwet state, the sheet-like member can be carried or sent as being folded and enclosed in a flat bag such as an envelope. That is, although it is not possible to be used as being continuously carried, the sheet-like member is extremely easy to be carried to a new placing location. In addition, the reservoir to reserve water for supplying water to the water-supply section is also easily carried in a state that water is not reserved. In this manner, although it is not always easily usable anywhere as carrying in a bag, carrying can be easily performed in an unwet state. For example, it is extremely easy to bring home or to bring to an office after buying a product at a shop.

Here, the folding line denotes a portion at which a crease of the sheet-like member is formed. For example, the folding line may be formed by pressing the sheet-like member along the line to be the folding line (i. e. , forming a groove by pressing), by thinly scraping along the line (i.e., forming a groove by scraping), by forming a previously-creased line along the line, by forming a line of perforation, or by aligning plural slits longer than each hole of perforation in line. That is, it is required to be in a state of enabling easy folding along the folding line.

Further, since the section of one end side of the sheet-like member is to be the water-supply section in a state of being folded, the humidifying section being the sheet-like member continuing to the water-supply section is essentially in a state of being curved at a section continuing to the folding line of the water-supply section.
By forming the folding line at the humidifying section as continuing to the folding line of the water-supply section so that the humidifying section is to be folded in a prearranged manner, the humidifying section can be prevented from being widely expanded to be relatively compact. When adjacent planes respectively between the folding lines are contacted as the humidifying section being folded, water evaporation is disturbed and the evaporation amount of water is decreased. Here, by curving the folding line, the above contact between the planes can be prevented even in the state of being folded. Further, since moderate folding can be performed, it is possible to prevent the humidifying section from occupying large volume as being expanded. Accordingly, a placing location can be easily ensured.

Further, by continuing the folding line of the humidifying section from the water-supply section, the humidifying section is to be naturally in a moderately folded state only by simply folding the water-supply section. For example, in the case that placing is performed by a user as folding the sheet-like member by oneself, the user can easily place the natural evaporation type humidifier.

According to claim 2, in the natural evaporation type humidifier of claim 1, the folding line of the water-supply section is linear, and the curved folding line of the humidifying section is constituted with a slit as cutting the sheet-like member.

According to the invention of claim 2, the entire water-supply section can be flat-shaped as being further reliably compact without being expanded at the folded portion by linearly forming the folding line of the water-supply section.
Further, since curved folding line of the humidifying section continued from the linear folding line of the above water-supply section is constituted with a slit as cutting the sheet-like member, the humidifying section is moderately folded along the slit having stress exerted to the slit being the folding line of the humidifying section only by folding the water-supply section along the folding line. In this manner, the natural evaporation type humidifier can be easily assembled. Further, when the humidifying section is folded at the folding line being the slit, the slit is opened to some extent. Accordingly, wind can pass through the humidifying section being sheet-shaped and evaporation rate at the humidifying section can be improved.

In consideration of a shape for bringing home to buy at a shop, a shape for transportation for mail order etc. in the above placing situation by a user, it is preferable that the entire sheet-like member can be packed in an envelope-shaped thin bag as being folded having some of the folding lines of the humidifying section formed linear respectively continuing from the linear folding line of the water-supply section. Here, it is also possible that the above includes the folding line of the humidifying section being linear in part.
Further, it is preferable that the slit is formed to be slit-shaped without reaching the side edge of the end portion of the humidifying section side.
Further, it is also possible that the folding line of the humidifying section is formed to be a slit from a position being apart for a certain distance from the folding line of the water-supply section while a portion thereof continuously connected to the folding line of the water-supply section is formed as the above folding line other than the slit.

According to claim 3, in the natural evaporation type humidifier of claim 1 or claim 2, plural cutout sections and/or slits are formed at the humidifying section of the sheet-like member toward the one end side from a side edge of the other end side.

According to the invention of claim 3, since the sheet-like member of the humidifying section is to be in a separated state owing to the cutout sections and slits, wind can pass through the humidifying section being sheet-shaped and evaporation rate at the humidifying section can be improved. In addition, the shape expanding from the lower side to the upper side of the humidifying section can be variously designed owing to the above curved folding lines and shapes, numbers and layout of the cutout sections and slits, so that design flexibility can be improved. Further, it is possible to be shaped into leafs, petals and the like owing to the shapes of the cutout sections and slits for designing to be a bunch of flowers or a bouquet. In this manner, design planning can be easily performed.

According to claim 4, in the natural evaporation type humidifier of any one of claims 1 to 3, the sheet-like member is formed to be a shape spreading as being apart from a center section side of the sheet-like member by forming bilateral side ridges of the sheet-like member approximately radially toward the outer side against the center section; an end section at the center section side being the section of the one end side of the sheet-like member is folded along the plural folding lines approximately in the radial direction; and the sheet-like member is supported at the water-supply section or the vicinity of the water-supply section being the one end side and has hardness enabling the humidifying section to perform self-standing in a state of being wet.

According to the invention of claim 4, since the sheet-like member is formed to be a shape spreading as being apart from the center section side, it is possible to shape the humidifying section further spreading compared to the water-supply section being the center section side. Accordingly, the area of the humidifying section to evaporate water can be ensured more sufficiently even being compactly shaped.
Here, the center section of the sheet-like member denotes the center section in the radial direction of the folding lines formed approximately along the radial direction as being the center section of the radially expanding sheet-like member in the radial direction. Although it is not necessarily the case that the center section denotes the center in shape, the barycenter or the like of the sheet-like member, it is also possible to include the center in shape, the barycenter or the vicinity thereof. Further, the center section of the sheet-like member may not include a part of the sheet-like member. When a paper portion of a paper fan is radially expanded as excluding a frame thereof, there is no paper essentially at the center section of the radial shape. The sheet-shaped member may be formed as a shape having no member at the radial center section as the above, for example.

According to claim 5, in the natural evaporation type humidifier of claim 4, the sheet-like member is formed to be a shape having the center section cut out and spreading from the center section radially in the direction toward an approximate entire circumference or some of the entire circumference.

According to the invention of claim 5, since the sheet-like member is formed to be a shape as expanding radially in the above state of having the center section cut out, humidifying performance can be improved as ensuring large area as the humidifying section. Here, it is preferable to be formed as expanding close to the entire circumference for ensuring the area of the humidifying section and enabling to design the shape of the humidifying section expanding from the lower side toward the upper side, for example. Accordingly, it is possible to design a preferable shape such as a shape of a bunch of flowers and a bouquet-like shape. Here, even when the sheet-like member is formed as expanding toward the entire circumference against the center, there exist bilateral side ridges. That is, not being simply shaped to have a hole at the center section, the sheet-like member has a slit or a cutout section reaching the hole of the center section from the side edge.

According to claim 6, in the natural evaporation type humidifier of any one of claims 1 to 5, a water reservoir to reserve water in which the water-supply section is immersed is further provided; the water reservoir includes a reservoir body of which upper side is opened and a cover to close the opening as being fit detachably attachable with an upper part of the reservoir body, the cover having a slit-shaped opening through which the folded water-supply section of the sheet-like member is inserted; and pull-out resistance is generated at the water-supply section against the opening of the cover with urging force exerted by the water-supply section as expanding from the folded state in a direction to widen the opening while most part of the opening is closed when the water-supply section is inserted to the opening.

According to the invention of claim 6, the cover is fit with the reservoir to reserve water in which the water-supply section is immersed and the water-supply section is inserted to the slit-shaped opening of the cover. Therefore, even in the event that the sheet-like member and the water-supply reservoir are toppled, water spilling is restricted as water leaks only through the slit-shaped opening of the cover. Since the water-supply section is inserted to the slit-shaped opening, water spilling is further restricted.
Accordingly, since water does not spill or spills by a slight amount even when being toppled, flexibility of the placing location can be improved.

Further, since the water-supply section inserted to the opening exerts force in the direction of expanding of the folded water-supply section, pull-out resistance is exerted at the water-supply section which is inserted to the slit-shaped opening. Accordingly, the sheet-like member is prevented from being easily detached from the reservoir. Further, even when the reservoir and the sheet-like member are toppled as described above, the water-supply section is not detached from the slit-shaped opening. Accordingly, the opening is kept closed with the water-supply section, so that the spilling amount of water is significantly restricted.
Further, even in a state that the water-supply section is supported to the slit-shaped opening, it is possible to perform cleaning as easily detaching the sheet-like member from the reservoir by pulling out the sheet-like member while holding the reservoir. In this manner, even when being dirty, the sheet-like member can be easily cleaned.

According to claim 7, in the natural evaporation type humidifier of any one of claims 1 to 5, the water-supply section is maintained in a folded state as being inserted through a slit-shaped hole of a fold-retaining member and is put in a reservoir having upper side opened while reserving water.

According to the invention of claim 7, since the water-supply section is inserted to a slit-shaped hole of the fold-retaining member, the water-supply section in a folded state can be prevented from being expanded. Here, when the fold-retaining member has larger specific gravity than that of water, the humidifying section can be stably maintained in an erected state as the fold-retaining member being a weight.
Further, since the water-supply section can be maintained in a folded state even without the dedicated reservoir to reserve water as in claim 6, a reservoir to reserve water is freely selectable. Here, since it is not expected to have an effect of water-spilling prevention as the dedicated container, reservoir selection becomes flexible instead of decrease of placing location flexibility.
Further, the sheet-like member can be cleaned as the fold-retaining member remains attached.

### Effects of the Invention

According to the present invention, a natural evaporation type humidifier can obtain sufficient water-supply performance and sufficient humidifying performance associated therewith as being sufficiently downsized, so that usability of the natural evaporation type humidifier can be improved.

### BRIEF DESCRIPTION OF THE DRAWINGS

FIG. 1 is a plane view illustrating a sheet-like member to be a natural evaporation type humidifier according to an embodiment of the present invention;
FIG. 2 is a perspective view illustrating an example of usage of the natural evaporation type humidifier according to the embodiment of the present invention;
FIG. 3 is an explanatory perspective view for usage of the sheet-like member according to the embodiment of the present invention;
FIG. 4 is a perspective view illustrating another usage example of a natural evaporation type humidifier according to an embodiment of the present invention;
FIG. 5 is an explanatory perspective view of a sheet-like member and a fold-retaining member for another usage example of a natural evaporation type humidifier according to an embodiment of the present invention; and
FIG. 6 is a perspective view illustrating a usage example of FIG. 5 of the natural evaporation type humidifier according to the embodiment of the present invention.

### DETAILED DESCRIPTION OF THE EMBODIMENTS

In the following, embodiments of the present invention will be described with reference to the attached drawings.

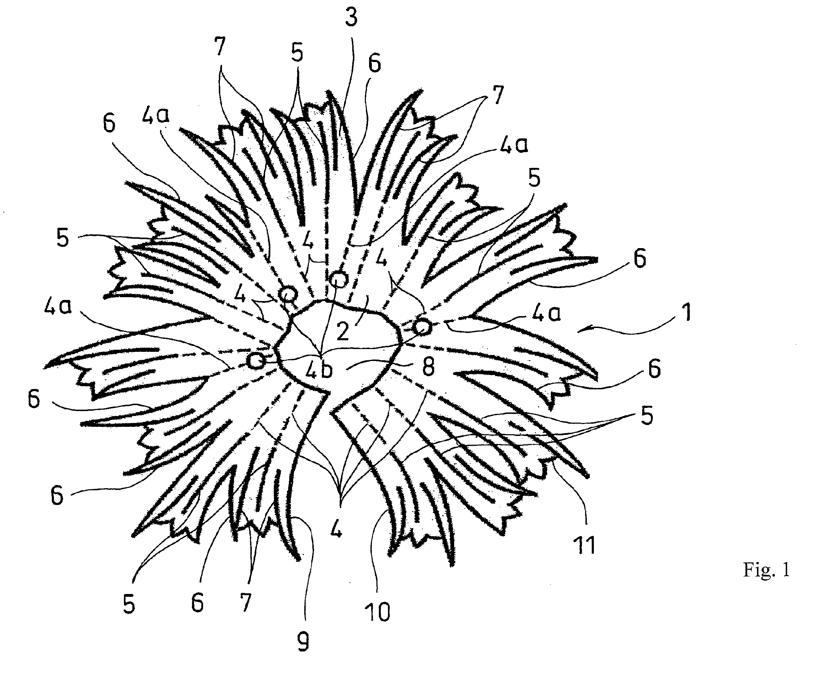

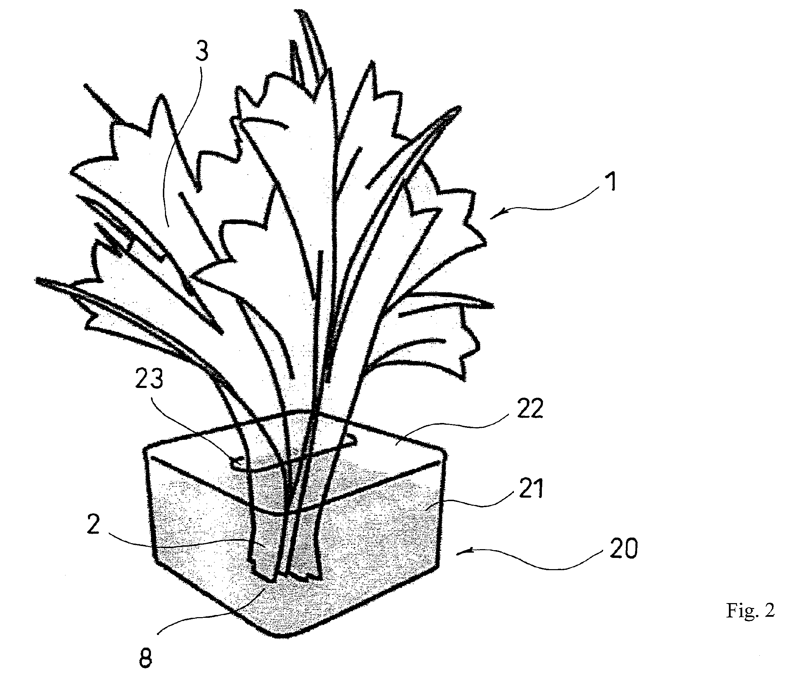

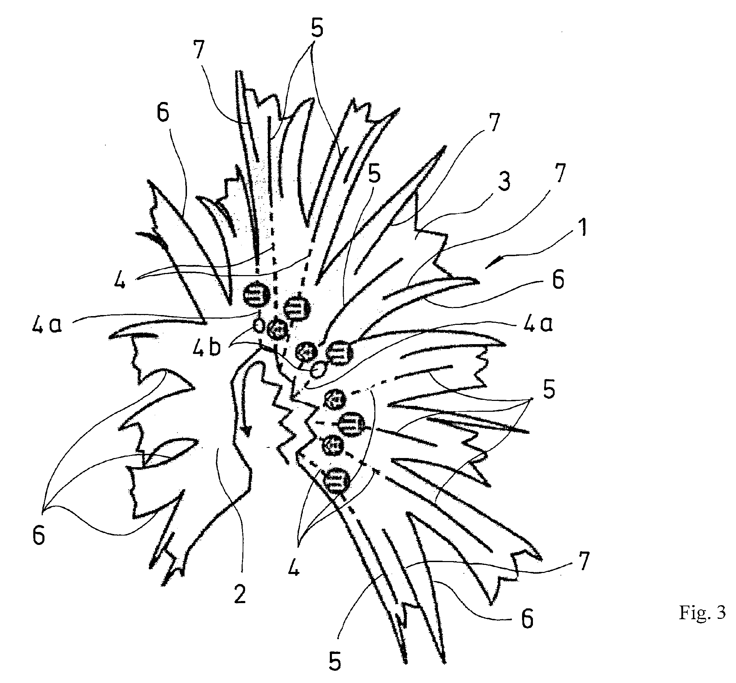

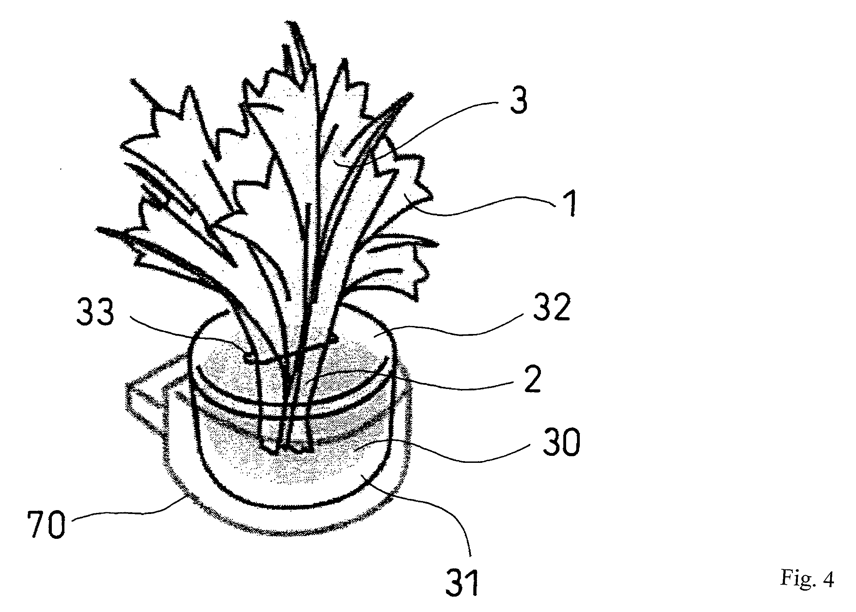

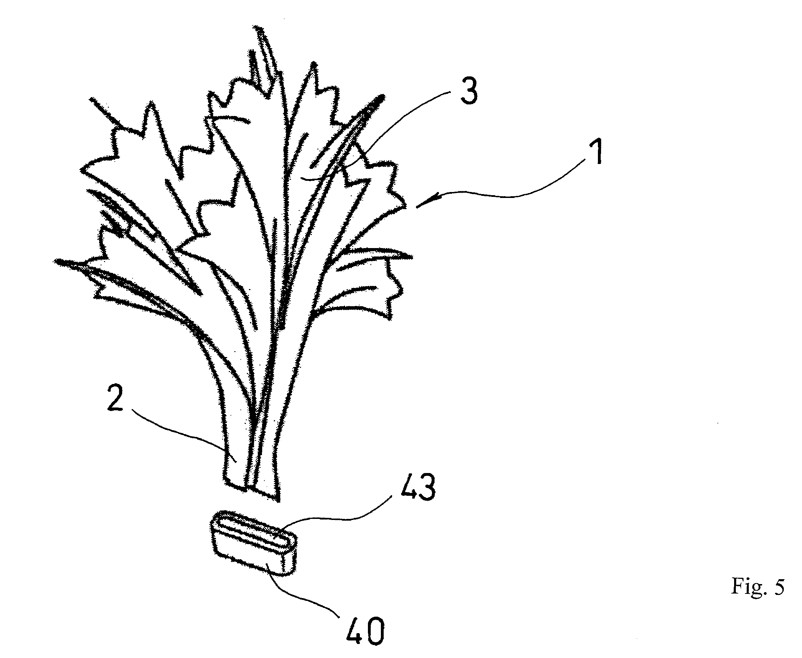

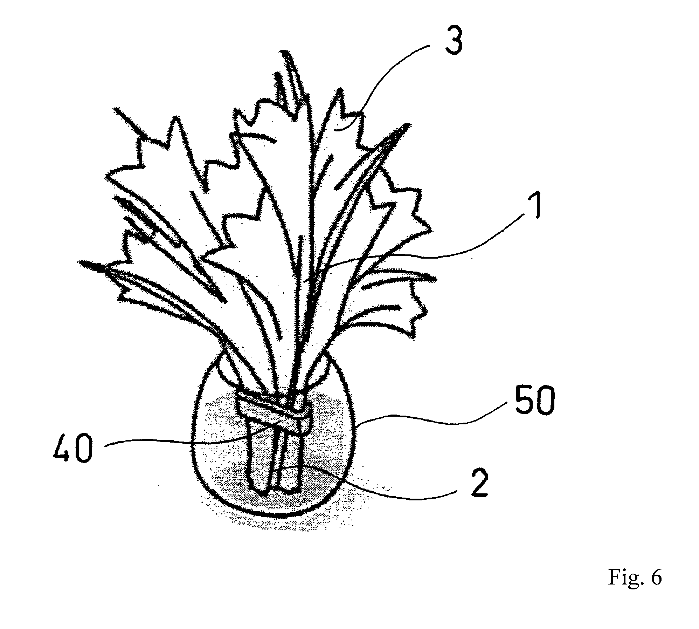

FIG. 1 is a plane view illustrating a sheet-like member of a natural evaporation type humidifier in a developed state according to an embodiment of the present invention. FIG. 2 is a perspective view illustrating the natural evaporation type humidifier. FIG. 3 is an explanatory view for folding procedure of the sheet-like member. FIG. 4 is a perspective view illustrating a modified example of the natural evaporation type humidifier. FIG. 5 is a perspective view illustrating a state of attaching a fold-retaining member as another modified example. FIG. 6 is a perspective view illustrating a natural evaporation type humidifier with the above fold-retaining member.

As illustrated in FIG. 2, the natural evaporation type humidifier of the present embodiment includes a sheet-like member 1 having a capillary structure capable of absorbing water with capillarity and a reservoir 20 to reserve water to be evaporated as being absorbed by the sheet-like member 1. Here, the reservoir 20 is usable as long as water can be basically reserved therein and a later-mentioned water-supply section of the sheet-like member 1 can be immersed in the reserved water. As the sheet-like member 1 can be distributed separately as well, the sheet-like member 1 may be regarded as a natural evaporation type humidifier.

In the present embodiment, as illustrated in FIG. 1, bilateral side ridges 9, 10 of the sheet-like member 1 are formed approximately radially toward the outer side against an imaginary center section 8 which positions outside the sheet-like member 1. Accordingly, the sheet-like member 1 is formed to be a shape spreading as being apart from the center section 8.
That is, the sheet-like member 1 is formed to be a shape having the center section 8 of the sheet-like member 1 cut out and spreading from the cut-out center section 8 radially in the direction toward an approximately entire circumference or some of the entire circumference. In the present embodiment, as illustrated in FIG. 1, the sheet-like member 1 is shaped as radially spreading in a state of being close to the entire circumference although not being the entire circumference.

Here, the sheet-like member 1 is exemplarily made of nonwoven fabric. However, it is also possible to be made of paper or woven fabric, for example. The sheet-like member 1 is required to have hardness to be self-standing in a state that a lower end section (i.e., a later-mentioned water-supply section 2 or the vicinity of the water-supply section 2 of a humidifying section 3) is supported when being used as illustrated in FIG. 2. Further, it is required to have a capillary structure as described above. In the present embodiment, for example, the nonwoven fabric having antibacterial and antifungal actions is formed of material containing an antibacterial and antifungal agent of organic system or nonorganic system such as metal particles, and the like.

Further, the sheet-like member 1 is constituted with thick portions finely grid-shaped in a matrix manner and thin portions thinner than the thick portions located between the grids to be a shape having asperity at the surface thereof. Accordingly, it becomes possible to increase surface area and to increase an evaporation rate. In particular, the thin portions can increase the evaporation rate per unit volume and the thick portions can ensure the hardness for self-standing as described above even through the sheet-like member 1 is thinned as a whole.

The natural evaporation type humidifier is formed by folding the sheet-like member 1. The sheet-like member 1 is folded along plural folding lines 4 approximately in the radial direction and an end section at the center section 8 side being one end section side is immersed in the reserved water to be the water-supply section 2 for supplying water to a portion positioning above the one end section (i.e., the later-mentioned humidifying section 3) of the sheet-like member 1. Here, the end section at the center side denotes the circumference of the cut-out section in a state that the above center section 8 is cut out.

For example, at the end section being the circumference of the cut-out center section 8, a dozen to dozens of folding lines 4 are formed along the radial direction from the center section 8 at intervals respectively in the circumferential direction. These folding lines 4 are for prompt folding, for example. In the present embodiment, each folding line 4 is shaped to have plural short slits formed in line, that is, to be a shape like a broken-line, as being illustrated by broken lines in FIGS. 1 and 3.
Here, not limited to the slits like a broken line, the folding line 4 may be a previously-creased line, a line having a groove-shaped structure, or a line of perforation on which holes are formed in line, as long as being in a state of enabling prompt folding thereat.

The plural folding lines 4 at the end section of the center side being the water-supply section 2 of the sheet-like member 1 are formed radially from the center section 8 which is cut out as described above while being formed respectively in a linear manner. Here, the respective folding lines 4 mutually having intervals are not necessarily to be in the radial direction against one center point. Extended lines of all of the folding lines 4 toward the center side do not necessarily intersect approximately at one point.

Here, it is also possible to form the respective folding lines 4 radially against one point being the center. However, in the present embodiment, the extended lines of the respective folding lines 4 not being directed to be concentrated to one point on purpose are deviated respectively from the radial direction against one point, for example, in order to provide a natural impression yet being an artificial object.
Further, it is also possible that some of the extended lines of the folding lines 4 are in the radial direction against one point (i.e., pass through the same point) and the rest of the extended lines of the folding lines 4 pass through the vicinity of the one point but do not pass through the one point.

Here, each distance between the adjacent folding lines 4 is not the same among the folding lines 4 to be different. It is also possible that the distances are even at some of distances among the folding lines 4. In the present embodiment, although the respective folding lines 4 are radially arranged, the extended lines of all of the folding lines 4 do not necessarily pass through one point being the center. Therefore, the distances among the folding lines 4 cannot be measured in the same conditions.
Anyhow, even though there may be deviation of directions and distances, the respective folding lines 4 are arranged mutually having intervals while being arranged radially against the center section 8.

Here, lengths of the respective folding lines 4 differ from one another. However, it is also possible that the lengths of some of the folding lines 4 are the same. Further, ends at the outer circumference side of the folding lines 4 are not necessarily arranged on a single circle. The deviation is formed on purpose to appear as a natural shape yet being an artificial object as described above. As can be seen from the above, the boundary between the water-supply section 2 and the humidifying section 3 is not clearly defined in the sheet-like member 1. The water-supply section 2 is defined as the area in which adjacent planes are capable of being approximately contacted among the planes respectively between the folding lines 4 by folding at the folding lines 4. Then, the humidifying section 3 is defined as the area thereabove, that is, the area which includes an area having adjacent planes separated.

Further, the water-supply section 2 is not necessarily immersed entirely in the water. It is only required that at least some of the lower side of the water-supply section 2 is immersed in the water.
The water-supply section 2 is formed by performing folding at the folding lines 4 formed of the above broken-line-shaped slits as alternately repeating mountain fold and valley fold viewing from one face side of the sheet-like member 1. That is, when one folding line 4 is folded to be mountain fold, the adjacent folding line 4 is to be valley fold. Further, the folding line 4 adjacent to the folding line 4 being valley fold is to be mountain fold. In FIG. 3, the folding lines 4 labeled "mountain" is folded to be mountain fold and the folding lines 4 labeled "valley" is folded to be valley fold.

In this manner, by folding the folding lines 4 as repeating mountain fold and valley fold to form the water-supply section 2, the water-supply section 2 is thin-plate-shaped. Since the folding lines 4 are arranged being irregularly not being regularly as described above, the bilateral side ridges thereof has protruded portions and recessed portions not to be in a state of aligned creases.

The cut-out side of the center section 8 of the above sheet-like member 1 is to be the lower end of the water-supply section 2. The cut-out section is not shaped like a circle or a regular polygonal. However, at the side edge of the sheet-like member 1 of the cut-out section side, end portions between the respective folding lines 4 at the cut-out side are approximately formed straight as an exemplary manner. Further, when the water-supply section 2 is formed by folding the end section of the sheet-like member 1 at the center section 8 side as described above, vertical positions of the end portions of the respective folding lines 4 are approximately aligned while the widths therebetween mutually differ.

Accordingly, since the lower ends of the respective folding lines 4 are not much deviated vertically, it is possible to prevent a part thereof from being in a state of not absorbing water as leaving from the water surface. Further, by forming the water-supply section 2 as repeating mountain fold and valley fold at a dozen to dozens of the folding lines 4, the water-supply section 2 can be extremely compact. In addition, a relatively wide area of the sheet-like member 1 can be immersed in the water as the water-supply section 2.

Having actually wide area despite of being compactly formed, the water-supply section 2 is provided with water-supply capacity to sufficiently supply water to the humidifying section 3 which has wider area.
Further, since the water-supply section 2 is compactly formed, opening area of the reservoir 20 to reserve water in which the water-supply section 2 is immersed can be compact. Accordingly, the reservoir 20 can be compactly formed as well.

At the humidifying section 3 being the outer side of the water-supply section 2 in the sheet-like member 1, a folding line 5 connected to the folding line 4 of the water-supply section 2 is formed in a curved manner. Here, the folding line 5 is a strip of a slit-shaped cut line. Accordingly, the sheet is actually not in a continued state on the folding line 5 as not in a folded state of continued sheet. However, similarly to the case of being folded, the sheet direction is largely varied at the position of the folding line 5 to be in a folded state in appearance. The portion constituted with the cut line is to be the folding line 5, and then, the folding line 5 and the surrounding portion thereof are to be a folding portion at which the sheet is moderately folded. The folding line 5 does not reach a side edge 11 at the outer circumferential side (i. e. , an outer edge) of the humidifying section 3, so that the outer edge side of the folding line 5 is not in a cut state. Here, not limited to a single slit-shaped cut line, the folding line 5 may be plural slits formed on one line (i.e. , one curved line), may be a line of perforation, or may be a groove.

When the straight-line-shaped folding line 4 of the water-supply section 2 is folded, the water-supply section 2 can be completely folded. However, since the folding line 5 is curved, the folding line 5 of the humidifying section 3 is in a moderately folded state (e.g., 160 degrees or less) not in a state that two planes arranged to sandwich the folding line 5 are mutually contacted as being folded by 180 degrees at the folding line 5.
Accordingly, by folding the sheet-like member 1 at the folding line 4 of the water-supply section 2, the humidifying section 3 is in a moderately folded state at the folding line 5 being a cut line.

Here, a curved state, length and a protruded direction of the curved portion of each folding line 5 can be arbitrarily determined. It is also possible to be arc-shaped having a different curvature radius for each folding line 5. At that time, by respectively setting the curved state and length differently, a natural shape can be obtained yet being an artificial object.

By the way, it is not the case that a cut line to be the folding line 5 is formed respectively to all of the folding lines 4 of the water-supply section 2. At some of the folding lines 4, a later-mentioned cutout section 6 is arranged without arranging the folding line 5. Accordingly, some of the folding lines 4 (as illustrated by numeral 4a in FIGS. 1 and 3) reach the side edge of the cutout section 6 side. In this case, the folding line 4a is formed to be a straight line from the side edge of the center section 8 side to the side edge 11 of the outer circumferential side.
Accordingly, the entire sheet-like member 1 is folded linearly at this portion.

For example, approximate four strips (e.g., three to six strips approximately) of such folding lines 4a not having the curved folding line 5 connected respectively thereto are arranged to one sheet-like member 1.
For transporting, distributing, mailing and the like, the sheet-like member 1 is packed in an envelope-shaped flat bag. At that time, since the creases become linear by folding the sheet-like member 1 at the folding lines 4a, the entire sheet-like member 1 can be folded to be flat as well as the water-supply section 2. Accordingly, the area of the sheet-like member 1 to be packed in a bag can be significantly reduced and thickness thereof can be lessened as not to be in a thickened state of being expanded even if being folded. Hence, handling can be performed as a convenient size. Here, the folding line 4a is provided with a small round hole 4b to be easily distinguishable from other folding lines 4 by viewing.

Further, by folding plural times, strength of the entire sheet-like member 1 can be increased, so that the sheet-like member 1 packed in a bag is prevented from being folded at an unintended part. In addition, downsizing to some extent as described above can provide easy handling for displaying at shops.

At the section to be the humidifying section 3 of the sheet-like member 1, plural cutout sections 6 and/or slits 7 are formed toward the center section 8 side from the side edge 11 at the outer circumferential side being opposite to the center section 8. In the present embodiment, both of the cutout sections 6 and the slits 7 are formed. Further, in the present embodiment, the natural evaporation type humidifying section (without including the reservoir 20) constituted with the sheet-like member 1 is designed to be portrayed as a bouquet.

By arranging the cutout sections 6 and the slits 7 at the humidifying section 3 from the outer circumferential edge side toward the center section 8 side, portions of the humidifying section 3 between the cutout sections 6 and the slits 7 can be shaped to be portrayed as leafs and petals. In this manner, it is possible to obtain a design of a bouquet (including a general bunch of flowers). Here, not limited to the bouquet-shaped design, various shapes can be obtained in accordance with shapes of the above cutout sections 6 and slits 7. For example, it is also possible to obtain a shape of portraying flames or splashes. Further, it is also possible to obtain a more specific shape such as an animal, a vehicle and a face.

Here, the cutout section 6 is shaped by cutting out a plane from the sheet-like member 1 and the slit 7 is shaped by cutting a line. It is preferable that the cutout sections 6 and slits 7 are shaped to be curved.
Further, it is possible for wind (i.e., air) to pass through the sheet-like member 1 at the respective portions of the cutout sections 6, the slits 7 and the slits being the above folding lines 5. Accordingly, the evaporation rate at the humidifying section 3 can be improved.

By the way, the cutout sections 6 cause decrease of area of the sheet-like member 1. However, for compensating decrease of the area, the area can be increased by widening the radially-expanding section of the sheet-like member 1 as close to the entire circumference as possible or heightening the humidifying section 3. When the water-supply section 2 of the sheet-like member 1 is folded at the folding lines 4 as described above, the humidifying section 3 is naturally folded at the folding lines 5 to be a shape illustrated in FIG. 2. Here, only by simply folding the water-supply section 2, the water-supply section 2 ends up to be expanded after being released. In the present embodiment, the water-supply section 2 is immersed in water as being maintained in a folded state by utilizing the reservoir 20.

The reservoir 20 includes, for example, a box-shaped reservoir body 21 of which upper side is opened and a cover 22 to close the opening of the reservoir body 21 by being fitted with the upper portion of the reservoir body 21 as being detachably attachable. The box-shaped reservoir body 21 having the upper portion thereof opened is made of clear resin, for example. Accordingly, the amount of reserved water as being poured to the inside thereof can be recognized from the outside.

The cover 22 is a thin box-shaped member (i. e. , being thin in the vertical height) of which lower side is opened. The cover 22 closes the opening of the reservoir body 21 as the opening at the lower side being fitted to the opening portion of the upper part of the reservoir body 21. The fitting is performed relatively tightly. Accordingly, even when the reservoir 20 is toppled, the cover 22 is not to be uncoupled from the reservoir body 21 to cause little water leakage from the fitting portion between the reservoir body 21 and the cover 22. Here, it is exemplary that the cover 22 is detachably attachable against the reservoir body 21. However, it is also possible that the cover 22 is in a state of being fixed to the reservoir body 21 by adhesion and the like. In this case, water pouring is performed through a later-mentioned opening 23 of the cover 22.

The opening 23 which is laterally long slit-shaped is arranged at a member constituting the upper face of the cover 22. The slit-shaped opening 23 has thickness to enable the water-supply section 2 to be inserted therethrough after being folded with alternate mountain fold and valley fold at the folding lines 4 of the water-supply section 2 of the sheet-like member 1 as describe above. When the folded water-supply section 2 is inserted through the opening 23 and released, the water-supply section 2 is contacted to bilateral side edge portions of the slit as being slightly expanded. Even if the water-supply section 2 does not reach the bottom of the reservoir body 21, the water-supply section 2 is supported to the opening 23 of the cover 22. In order to be in a stable state, it is preferable that the water-supply section 2 is inserted through the opening 23 until the lower end of the water-supply section 2 contacts to the bottom of the reservoir body 21.
Here, elastic force is exerted in the expanding direction of the folded water-supply section 2 from a compressed state. The elastic force (i.e., urging force) causes friction force against the bilateral side edges of the opening 23 of the cover 22, so that the water-supply section 2 of the sheet-like member 1 is in a state of being supported to the reservoir 20 with the cover 22.

In addition, the above friction force causes pull-out resistance force of the water-supply section 2 against the cover 22. For example, the water-supply section 2 is prevented from being pulled-out through the opening 23 as the humidifying section 3 moves to be toppled. Further, even when being wet as absorbing water, the sheet-like member 1 has hardness to maintain a self-standing state in which the humidifying section 3 is erected as the water-supply section 2 or the humidifying section 3 at the vicinity thereof being supported. Here, as described above, the boundary between the water-supply section 2 and the humidifying section 3 not being clearly defined may be substantially at the lower end portion of the humidifying section 3, that is, the portion right above the water-supply section 2 may be at the height position of the slit-shaped opening 23.
When the height position of the upper end portion of the water-supply section 2 is at the height position of the opening 23, the water-supply section 2 is not entirely immersed in the water poured into the reservoir 20 and the upper portion of the water-supply section 2 is to be above the water surface.

Further, in the state that the water-supply section 2 is inserted through the opening 23, the opening 23 is closed in part with the water-supply section 2 and a part of the opening 23 is slightly opened in actuality. Even when the reservoir 20 and the sheet-like member 1 are jointly toppled, the water-supply section 2 of the sheet-like member 1 remains inserted through the opening 23 owing to the above pull-out resistance. Accordingly, the opening 23 is maintained as being closed in part, thereby suppressing water leakage from the opening 23. Even if there is slight leakage of water, the upper face of a location for placing the natural evaporation type humidifier can be prevented from being flooded.

Further, even when the water surface of the poured water in the reservoir 20 reaches the opening 23 in the toppled state, spilling speed of water from the opening 23 is suppressed. Accordingly, it is possible to have little water leakage by returning the natural evaporation type humidifier to the original posture as quickly as possible. Therefore, it is possible to place at relatively many locations as restriction for the placing location can be relaxed. Here, since there may be a fear of some water leakage, it is preferable to be apart from something causing a problem when being wet (e.g., important documents, electric products completely without waterproof property).

FIG. 4 illustrates a modified example of the reservoir 20 of the natural evaporation type humidifier. The sheet-like member 1 in FIG. 4 is completely the same as the sheet-like member 1 of the above embodiment and the description thereof will not be repeated. The reservoir 20 is box-shaped in the above embodiment. A reservoir 30 of FIG. 4 has a cylindrical shape as being changed therefrom. Other than being cylindrical, a reservoir body 31 and a cover 32 are configured to be similar to the reservoir 20 of FIG. 2. The cover 32 also has a slit-shaped opening 33 as being similar to the slit-shaped opening 23 in the above embodiment.

The reservoir 30 of the modified example illustrated in FIG. 4 has the approximately same diameter as that of a can or a plastic bottle for drinking. Accordingly, for example, the reservoir 30 is sized to be capable of being held by a cup holder 70 in an automobile and the like. In this manner, the natural evaporation type humidifier of the modified example can be easily mounted on an automobile with the cup holder 70. That is, the natural evaporation type humidifier of the modified example can be mounted on a vehicle without a special attaching device as long as the cup holder 70 is provided. Here, since the reservoir 30 basically receives modification only as being cylindrically-shaped, the natural evaporation type humidifier therewith can be used in a usual building not in an automobile as being similar to the natural evaporation type humidifier with the reservoir 20 of the above embodiment.

FIG. 5 illustrates a natural evaporation type humidifier constituted with the sheet-like member 1 being similar to the above embodiment. Here, the dedicated reservoir 20, 30 is not provided. With the dedicated reservoir 20, 30, the opening 23, 33 is formed at the cover 22, 32. The water-supply section 2 can be maintained in the folded state as the folded water-supply section 2 of the sheet-like member 1 being inserted through the opening 23, 33. Here, with any of various types of usual reservoirs capable of reserving water without having the opening 23, 33, it is difficult to use the sheet-like member 1 alone as a natural evaporation type humidifier. However, by using a fold-retaining member 40 with a slit 43 shaped similarly to the opening 23, 33 of the above reservoir 20, 30, the water-supply section 2 can be maintained in the folded state.

The fold-retaining member 40 is a ring-shaped member having the slit 43, that is, a hole. Here, the fold-retaining member 40 is the ring-shaped member not being circular as being elongated corresponding to the shape of the slit 43.
A reservoir 50 capable of reserving water such as various types of eating utensils like cups and bowls, various types of vases and jugs can be used for the usual reservoir 50 simply having the upper side opened as illustrated in FIG. 6. Accordingly, any reservoir can be used therefor. In this case, when the sheet-like member 1 and the fold-retaining member 40 are to be used as a set, the reservoir 20, 30 is unnecessary to be used.

However, it is preferable to use the reservoir 20, 30 in order to reduce the amount of spilled water when toppled. That is, although types of the usable reservoirs 50 are greatly increased by utilizing the fold-retaining member 40, it is preferred to be placed at a location at which a problem due to spilling of a relatively large amount of water does not occur as a large amount of water being spilled with some reservoirs 50. In the above embodiment, the sheet-like member 1 can be cleaned after being pulled out from the reservoir 20, 30. In the present embodiment, the sheet-like member 1 can be cleaned simply by being taken out from the reservoir 50. It is also possible to clean the sheet-like member 1 after being taken out from the reservoir 50 and removing the fold-retaining member 40. In this manner, even when being dirty, the sheet-like member 1 can be easily cleaned.

According to the natural evaporation type humidifier as described above, since the water-supply section 2 is in the folded state, it is possible to supply a large amount of water to the humidifying section 3 in a state of being compactly formed by folding a section of the sheet-like member having a relatively large area. Accordingly, a sufficient amount of water can be supplied even if the area of the humidifying section 3 is enlarged. Further, since the humidifying section 3 is moderately folded at plural positions, it is possible to obtain high evaporation performance as sufficiently evaporating water while relatively reducing occupying space thereof even though the area of the humidifying section 3 is enlarged.

### DESCRIPTION OF NUMERALS

- 1: Sheet-like member
- 2: Water-supply section
- 3: Humidifying section
- 4: Folding line
- 5: Folding line (Slit, Folding portion)
- 6: Cutout section
- 7: Slit
- 8: Center section
- 9: Left side ridge
- 10: Right side ridge
- 11: Side edge at outer circumferential side
- 20: Reservoir
- 21: Reservoir body
- 22: Cover
- 23: Opening

- 30: Reservoir
- 31: Reservoir body
- 32: Cover
- 33: Opening
- 40: Fold-retaining member

## Claims

1. A natural evaporation type humidifier to humidify space therearound utilizing a sheet-like member with a capillary structure capable of absorbing water with capillarity by absorbing water to the sheet-like member above a water surface and naturally evaporating water from the sheet-like member as immersing a part of the sheet-like member in reserved water,
wherein a section of one end side of the sheet-like member is to be a water-supply section to supply water to a section of the sheet-like member above the section of the one end side by being folded along plural folding lines and being immersed in the reserved water;
the section above the section of the one end side is to be a humidifying section to naturally evaporate water absorbed with capillarity; and
a folding portion being moderately folded along a curved folding line which is continued from a folding line of the water-supply section is arranged at the humidifying section of the sheet-like member to be in an expanded state while the section of the one end side is supported.

2. The natural evaporation type humidifier according to claim 1,
wherein the folding line of the water-supply section is linear; and
the curved folding line of the humidifying section is constituted with a slit as cutting the sheet-like member.

3. The natural evaporation type humidifier according to claim 1 or claim 2,
wherein plural cutout sections and/or slits are formed at the humidifying section of the sheet-like member toward the one end side from a side edge of the other end side.

4. The natural evaporation type humidifier according to any one of claims 1 to 3,
wherein the sheet-like member is formed to be a shape spreading as being apart from a center section side of the sheet-like member by forming bilateral side ridges of the sheet-like member approximately radially toward the outer side against the center section;
an end section at the center section side being the section of the one end side of the sheet-like member is folded along the plural folding lines approximately in the radial direction; and
the sheet-like member is supported at the water-supply section or the vicinity of the water-supply section being the one end side and has hardness enabling the humidifying section to perform self-standing in a state of being wet.

5. The natural evaporation type humidifier according to claim 4,
wherein the sheet-like member is formed to be a shape having the center section cut out and spreading from the center section radially in the direction toward an approximate entire circumference or some of the entire circumference.

6. The natural evaporation type humidifier according to any one of claims 1 to 5, further comprising a water reservoir to reserve water in which the water-supply section is immersed,
wherein the water reservoir includes a reservoir body of which upper side is opened and a cover to close the opening as being fit detachably attachable with an upper part of the reservoir body, the cover having a slit-shaped opening through which the folded water-supply section of the sheet-like member is inserted; and
pull-out resistance is generated at the water-supply section against the opening of the cover with urging force exerted by the water-supply section as expanding from the folded state in a direction to widen the opening while most part of the opening is closed when the water-supply section is inserted to the opening.

7. The natural evaporation type humidifier according to any one of claims 1 to 5,
wherein the water-supply section is maintained in a folded state as being inserted through a slit-shaped hole of a fold-retaining member and is put in a reservoir having upper side opened while reserving water.
